(19) Europäisches Patentamt
European Patent Office
Office européen des brevets

(11) Veröffentlichungsnummer: **0 063 311**
**B1**

(12) **EUROPÄISCHE PATENTSCHRIFT**

(45) Veröffentlichungstag der Patentschrift: **02.10.85**

(51) Int. Cl.⁴: **D 06 M 15/643**, C 10 M 107/50

(21) Anmeldenummer: **82102931.1**

(22) Anmeldetag: **06.04.82**

(54) **Substantives Präparationsmittel für Garne oder Zwirne.**

(30) Priorität: **18.04.81 DE 3115679**

(43) Veröffentlichungstag der Anmeldung: **27.10.82 Patentblatt 82/43**

(45) Bekanntmachung des Hinweises auf die Patenterteilung: **02.10.85 Patentblatt 85/40**

(84) Benannte Vertragsstaaten: **AT BE CH DE FR GB IT LI NL SE**

(56) Entgegenhaltungen:
**DE - A - 2 359 966**
**DE - A - 2 502 155**
**DE - A - 2 753 200**
**DE - A - 2 816 196**
**FR - A - 1 331 599**
**FR - A - 2 259 938**
**FR - A - 2 318 268**
**GB - A - 1 287 745**
**US - A - 3 717 575**

**CHEMICAL ABSTRACTS, Band 79, Nr. 24, 17. Dezember 1973, Seite 28, Nr. 137906a, Columbus, Ohio, USA**
**SOVIET INVENTIONS ILLUSTRATED, Woche B18, 14. Juni 1979, Zusammenfassung Nr. 34813B/18, London, G.B.**

(73) Patentinhaber: **Th. Goldschmidt AG, Goldschmidtstrasse 100 Postfach 101461, D-4300 Essen 1 (DE)**

(72) Erfinder: **Dumm, Heinz, Holteyerstrasse 2, D-4300 Essen (DE)**
Erfinder: **Koerner, Götz, Dr., Kantorie 126, D-4300 Essen (DE)**
Erfinder: **Krakenberg, Manfred, Meistersingerstrasse 39, D-4300 Essen (DE)**
Erfinder: **Rott, Hans, Dr., Barkhovenallee 22, D-4300 Essen (DE)**
Erfinder: **Schmidt, Günter, Dr., Ahornstrasse 47, D-4300 Essen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 063 311 B1

BUNDESDRUCKEREI BERLIN

**Beschreibung**

Die Erfindung betrifft ein Mittel zum substantiven Präparieren von Garnen oder Zwirnen, insbesondere Nähgarnen, vorzugsweise solchen aus Polyester in Form einer Öl/Wasser-Dispersion und ein Verfahren zur Herstellung solcher Mittel.

Aus der DE-A-2 161 813 ist die Verwendung von Gemischen aus Diorganopolysiloxanen als Gleitmittel für organische Fasern bekannt. Die am Silicium gebundenen organischen Reste haben dabei 1 bis 5 Kohlenstoffatome. Verwendet werden Gemische von Diorganopolysiloxanen unterschiedlicher Viskosität. Wenn auch diese Gemische vorzugsweise ohne Mitverwendung von reinorganischen Ölen und/oder Wachsen bzw. wachsartigen Stoffen eingesetzt werden sollen, ist die Mitverwendung solcher Stoffe, wie natürlicher oder synthetischer Öle, Paraffin und Bienenwachs, nicht ausgeschlossen.

Aus der DE-A-2 535 768 sind Gleitmittel für organische Fasern aus Diorganopolysiloxanen, welche durch Emulsionspolymerisation hergestellt worden sind, bekannt. Diese sind dadurch gekennzeichnet, daß sie eine durchschnittliche Viskosität von mindestens 20 000 cSt (= $mm^2 s^{-1}$) bei 25° C haben und im Gemisch mit mindestens einem Paraffinwachs und/oder mindestens einem aus Fluor- und Kohlenstoff- sowie gegebenenfalls Chloratomen bestehenden Polymeren vorliegen. Die mit einer solchen Präparation behandelten Fasern sollen höhere Gleitfähigkeit und bessere Vernähbarkeit aufweisen. Ein typisches Beispiel einer solchen Präparation besteht aus einem Gemisch aus Diorganopolysiloxanen, Paraffinwachs und Polytetrafluorethylen.

Die Behandlung von Nähgarn auf Spulen mit wäßrigen Bädern, welche 6 bis 20 Gew.-% Organosiliciumpolymere enthalten, ist in der DE-A-2 753 200 beschrieben. Es können sowohl reine Siliconöle als auch Polysiloxan-Polyoxyalkylen-Blockmischpolymerisate zu diesem Zweck eingesetzt werden.

Der DE-A-2 816 196 liegt die Aufgabe zugrunde, Stapelfasergarnen eine gleichmäßig niedere Reibung in Verbindung mit zufriedenstellender Weichheit zu geben. Zur Lösung dieser Aufgabe wird ein Mittel zum Naßparaffinieren vorgeschlagen, bestehend aus

a) 18 bis 40% Paraffin, Schmelzbereich 45—60° C;
b) 2 bis 8% eines oder mehrerer Alkylimidazoline der Formel I

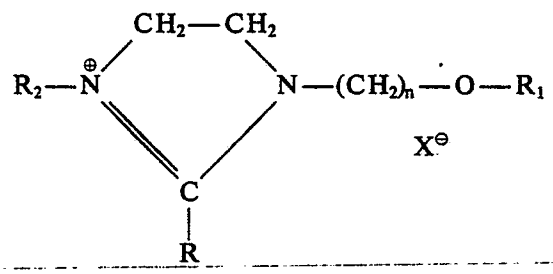

wobei

R $C_{12}$—$C_{22}$-Alkyl, Alkenyl oder Hydroxialkyl,
$R_1$ H, $C_1$—$C_{22}$-aliphatisches oder aromatisches Acyl,
$R_2$ $C_1$—$C_4$-Alkyl oder Hydroxialkyl,
n Zahlen von 2 bis 6 und
X ein Halogen-, $C_1$—$C_4$-Alkylsulfat-, $C_1$—$C_4$-Dialkylphosphat- oder $C_1$—$C_4$-Alkylcarboxylat-anion bedeuten;

c) 1 bis 7% eines oder mehrerer Aminoxide der allgemeinen Formel II

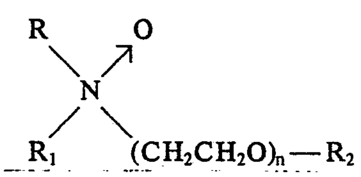

wobei

R $C_8$—$C_{12}$-Alkyl- oder Alkenyl,
$R_1$ $C_1$—$C_4$-Alkyl,
$R_2$ H oder $C_1$—$C_4$-Alkyl und
n Zahlen von Null bis 6 bedeuten;

d) 2 bis 9% eines Ethylenoxid/Propylenoxid-Blockpolymerisats der Formel III

$$H-(C_2H_4O)_y-(C_3H_6O)_x-(C_2H_4O)_y-H$$

wobei

x Zahlen von 20 bis 40 und
y Zahlen von 25 bis 1000 sein können;

e) 0 bis 5% eines Polyglykolethers der Formel IV

$$R-O-(C_2H_4O)_n-H$$

wobei

R $C_8-C_{18}$-Alkyl- oder Alkenyl und
n Zahlen von 3 bis 12 sind sowie

f) 0 bis 2% eines Copolymeren aus Vinylpyrrolidon und Vinylacetat, wobei das Gewichtsverhältnis VP/VAc von 3 : 7 bis 8 : 2 variieren kann und der an 100 Gew.-% fehlende Rest ist Wasser.

Die Versuche in der Praxis haben jedoch ergeben, daß die aus dem Stand der Technik bekannten Präparationen noch immer verschiedene Nachteile aufweisen. Ein Nachteil besteht z. B. in der nicht immer gleichmäßigen Präparierung eines Garnes, welche zur Folge hat, daß die sogenannte Nahtlänge unterschiedlich ausfällt. Unter Nahtlänge versteht man dabei die unter vorgegebenen, reproduzierbaren Bedingungen mögliche Nahtlänge bis zum Nähfadenabriß. Präpariert man die Garne oder Zwirne auf Spulen, haben häufig die Innenlagen der Spulen eine andere Auflagemenge als die Außenlagen der Spulen.

In anderen Fällen hat sich nachteilig ausgewirkt, daß trotz genügend hoher und gleichmäßiger Auflage zu hohe und zu unregelmäßige Reibungswerte erzielt werden, so daß unruhiger Lauf beim Vernähen oder Verstricken zu häufigem Maschinenstillstand führen. Außerdem treten dadurch unregelmäßige Naht- oder Maschenbilder auf. Die Reibung ist auch in den verschiedenen Geschwindigkeitsbereichen, welche z. B. beim Nähen auftreten, zu unterschiedlich.

Bevorzugt ist die Präparation von Nähgarnen, insbesondere von Polyesternähgarnen. Bei Einfachgarnen und schwach gedrehten Mehrfachzwirnen tritt nach Anwendung substantiver Paraffinpräparationen des Standes der Technik immer ein deutliches Absinken der Reißfestigkeit von 20% und mehr auf.

Der vorliegenden Erfindung liegt die Aufgabe zugrunde, die vorgenannten Nachteile zu überwinden und somit eine Präparation zu schaffen, welche substantiv und gleichmäßig auf die Faser aufzieht und bei der die Reduktion der Reibung über lange Garnstrecke und für verschiedene Geschwindigkeitsbereiche des laufenden Fadens gleichmäßig erfolgt. Der Reibungskoeffizient soll stärker als nach dem Stand der Technik mögich reduziert werden. Außerdem soll das erfindungsgemäße Mittel auch einen möglichst geringen Abrieb bei der Weiterverarbeitung der Garne, insbesondere beim Nähen, verbunden mit einer hohen Antistatik gewährleisten. Gleichzeitig soll eine Verringerung der Reißfestigkeit vermieden werden.

Diese verbesserten Eigenschaften findet man überraschenderweise bei einem Mittel in Form einer Öl/Wasser-Dispersion, welches dadurch gekennzeichnet, daß es

a) 5 bis 80 Gew.-% Siliconöl einer Viskosität von 500 bis 50 000 $mm^2 s^{-1}$ bei 25° C,
b) 10 bis 80 Gew.-% Wachs mit einem Schmelzpunkt ≧40° C,
c) 1 bis 10 Gew.-% Fettsäuren mit 6 bis 22 Kohlenstoffatomen, die gesättigt, verzweigt oder substituiert sein können oder Doppelbindungen aufweisen,
d) 0,4 bis 12 Gew.-% kationaktive Imidazoliniumsalze,
e) 0 bis 10 Gew.-% ethoxylierte Fettamine,

wobei die Summe der Bestandteile a) bis e) 100 Gew.-% ergeben muß, in Wasser dispergiert oder gelöst enthält.

Der Bestandteil a) ist ein Siliconöl mit einer Viskosität von 500 bis 50 000 $mm^2 s^{-1}$ bei 25° C. Besonders bevorzugt ist dabei ein Siliconöl mit einer Viskosität von 1000 bis 10 000 $mm^2 s^{-1}$. Das Siliconöl ist vorzugsweise ein Methylsiliconöl. Ein Teil der Methylgruppen kann durch Alkylgruppen mit einer längeren Kettenlänge und/oder Phenylgruppen ersetzt werden. Die Kettenenden der Polysiloxane werden im allgemeinen aus Trimethylsilylgruppen gebildet. Jedoch können auch Dimethylhydroxysilylgruppen vorliegen. Diese endbegrenzenden SiOH-Gruppen sollen jedoch nur in geringem Anteil vorhanden sein.

Die in Wasser dispergierte oder gelöste Phase enthält das Siliconöl in einer Menge von 5 bis 80 Gew.-%. Der Mengenanteil Siliconöl in der dispergierten oder gelösten Phase wird sehr wesentlich von der Art des Garnes oder des Zwirnes bestimmt, die mit der Präparation zu behandeln ist. Bestehen die Garne oder Zwirne überwiegend aus thermoplastischen Polymeren, verwendet man Zubereitungen mit einem hohen Anteil an Siliconöl. Bestehen die Garne oder Zwirne im wesentlichen oder zumindest an ihrer Oberfläche aus cellulosehaltigem Material, verwendet man erfindungsgemäße Zubereitungen, deren Siliconanteil zugunsten des Wachsanteils erniedrigt ist.

Für die Präparierung von Garnen oder Zwirnen aus thermoplastischen Polymeren sind deshalb erfindungsgemäße Mittel bevorzugt, deren organische Phase 50 bis 80 Gew.-% Siliconöl, insbesondere 70 bis 80 Gew.-% Siliconöl, enthält.

Bestehen die Garne oder Zwirne aus cellulosehaltigen Materialien, verwendet man erfindungsgemäße Zubereitungen, deren organische Phase bevorzugt 5 bis 20 Gew.-% Siliconöl, insbesondere 8 bis 12 Gew.-% Siliconöl, enthält.

Der Bestandteil b) wird von einem Wachs gebildet, das einen Schmelzpunkt von $\geqq 40°C$ aufweist. Ein typisches Beispiel eines solchen Wachses ist das bei 40 bis 42° C schmelzende Tafelparaffin. Insbesondere sind die höherschmelzenden Wachse, z. B. Mikrowachse mit einem Schmelzpunkt von 50 bis 60° C, geeignet. Besonders bevorzugt sind Wachse mit einem Schmelzpunkt $> 60°C$. Unter dem Begriff der Wachse sind deshalb erfindungsgemäß auch die höherschmelzenden mikrokristallinen Wachse zu verstehen, die aber dann zum Zweck der besseren Emulgierung mit niedrigerschmelzenden Paraffinen verschnitten werden können.

Für bestimmte Anwendungen, wie die Präparation von Zwirnen aus Polyesterstapelfaser, ist der Einsatz von Säure der Esterwachsen vorteilhaft. Sie werden allein oder in Mischung mit Paraffinwachsen verwendet. Beispiele solcher Säurewachse sind anoxydierte, insbesondere nach dem Fischer-Tropsch-Verfahren erhaltene Produkte. Beispiele für Esterwachse sind natürliche und industrielle Produkte wie Carnauba-Wachs oder das im Handel unter der Bezeichnung KPS erhältliche Wachs.

Diese Wachse liegen in der organischen Phase des Präparationsmittels in einer Menge von 10 bis 80 Gew.-% vor. Aus den Angaben zur anzuwendenden Menge Siliconöl ergibt sich reziprok, daß man innerhalb dieses Bereiches bei Garnen und Zwirnen aus thermoplastischen Polymeren Zubereitungen mit einem relativ niedrigen Wachsgehalt, bei Garnen und Zwirnen aus Cellulose Präparationen mit einem hohen Wachsgehalt verwendet.

Der Bestandteil c) wird durch Fettsäuren mit 6 bis 22 Kohlenstoffatomen gebildet. Diese können gesättigt sein oder Doppelbindungen aufweisen. Die Fettsäuren können auch verzweigt oder substituiert sein. Beispiele geeigneter Fettsäuren sind Capronsäure, Laurinsäure, Ölsäure, Stearinsäure, Behensäure, Hydroxystearinsäure, Isotridecansäure. Bevorzugt sind dabei Fettsäuren mit 18 Kohlenstoffatomen, wie Ölsäure und Stearinsäure. Man kann jedoch auch Gemische dieser Säuren bzw. Gemische von Fettsäuren unterschiedlicher Kettenlänge verwenden. Geeignet sind z. B. auch die durch Spaltung natürlicher Fette und Öle erhaltenen Fettsäuregemische mit wechselndem Anteil an Fettsäuren mit 12 bis 18 Kohlenstoffatomen. Die Fettsäuren sind in einer Menge von 1 bis 10 Gew.-% in der öligen Phase der Präparation enthalten. Überraschenderweise wurde gefunden, daß im wesentlichen die Fettsäuren die Substantivität des erfindungsgemäßen Mittels bedingen.

Als besonders wirksame Emulgatoren sowie zur Erzielung guter antistatischer Eigenschaften der fertigen Präparation werden kationaktive Imidazoliniumsalze, Komponente d), verwendet, welche in Mengen von 0,4 bis 12 Gew.-%, bezogen auf nichtwäßrige Phase, in der Zubereitung gelöst sind. Für die Präparation von Synthetics verwendet man bevorzugt 2,5 bis 6,0 Gew.-%. Kationaktive Imidazoliniumsalze sind dem Fachmann bekannt und z. B. in dem Buch »Cationic Surfactants«, E. Jungermann, Verlag M. Dekker, New York, 1970, beschrieben. Diese Imidazoliniumsalze tragen wenigstens einen langkettigen Kohlenwasserstoffrest als hydrophobe Gruppe. Derartige Imidazoliniumsalze können der Formel

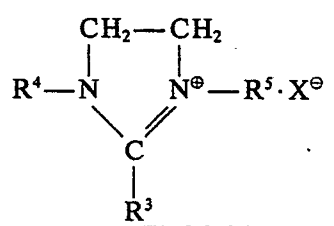

entsprechen. Dabei ist $R^3$ der langkettige Kohlenwasserstoffrest, der gesättigt oder ungesättigt sein kann. Er weist meist 10 oder mehr Kohlenstoffatome auf. $R^4$ ist ein Wasserstoff- oder Alkylrest. Der Alkylrest ist bevorzugt kurzkettig und enthält 1 bis 5 Kohlenstoffatome. Der Alkylrest kann substituiert sein und insbesondere am Kettenende einen Hydroxyrest tragen. Vorzugsweise ist der Rest $R^4$ ein Hydroxyethylrest. An die Hydroxylgruppe kann Alkylenoxid, insbesondere Ethylenoxid, angelagert sein. $R^5$ ist ein niederer Alkylrest, insbesondere der Methyl- oder Ethylrest. X ist ein anionischer Rest, vorzugsweise der Halogenidrest, insbesondere ein Chlorion oder eine anionische Gruppe, wie die

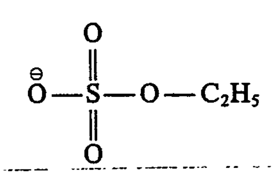

oder die Acetatgruppe.

Als Komponente e) können in der organischen Phase des erfindungsgemäßen Mittels bis zu 10 Gew.-% ethoxylierte Fettamine enthalten sein. Diese Verbindungen erleichtern die Emulgierbarkeit der Wachse bzw. Siliconöle und beeinflussen damit auch Griff und Reibung. Besonders gut brauchbar sind die Fettamine mit 10 bis 22 Kohlenstoffatomen, wobei an die Amingruppe Ethylenoxid in solchen Mengen angelagert ist, daß die Verbindungen wasserlöslich, zumindest wasserdispergierbar werden. Im Falle des Stearylamins werden 5 bis 10 Mol Ethylenoxid angelagert. Man kann auch Fettgemische, wie Kokosfettamin, an das etwa 2 bis 12 Mol Ethylenoxid angelagert sind, verwenden.

Die erfindungsgemäßen Mittel werden insbesondere in der Weise hergestellt, daß man die Komponente a) und die Komponente b) jeweils in getrennten Verfahren emulgiert. Das bevorzugte Verfahren zum Herstellen der erfindungsgemäßen Zubereitung ist deshalb dadurch gekennzeichnet, daß man das Siliconöl (Bestandteil a)) mit einem Teil der Fettsäuren (Bestandteil c)) und einem Teil der kationaktiven Imidazoliniumsalze (Bestandteil d)) einerseits und das Wachs (Bestandteil b)) mit den restlichen Anteilen der Fettsäuren (Bestandteil c)) und des Imidazoliniumsalzes (Bestandteil d)) andererseits emulgiert und die erhaltenen Dispersionen miteinander vermischt.

Bevorzugt wird das Siliconöl mit einem Teil des Imidazoliniumsalzes und der Ölsäure emulgiert.

Getrennt davon wird das Wachs oder die Wachsmischung aufgeschmolzen. Der Schmelze wird der restliche Anteil des Imidazoliniumsalzes sowie der restliche Anteil der Fettsäuren, insbesondere hierbei Stearinsäure, zugegeben.

Die beiden Dispersionen werden miteinander vermischt und insbesondere in Form der hochkonzentrierten Stammemulsion in den Handel gebracht. Zum Gebrauch wird diese Stammemulsion verdünnt. Die Konzentration der gebrauchsfertigen Flotte richtet sich nach der gewünschten Auflagemenge und dem Verhältnis Flotte zu behandelndem Fasermaterial für Nähzwirn. Im allgemeinen werden bei einer 50gew.-%igen Präparation für Nähgarne 10 g/l Flotte, für andere Garne 0,5 bis 1,0 g/l gewählt.

In den folgenden Beispielen werden erfindungsgemäße Präparationsmittel, deren Herstellung sowie die Eigenschaften der mit den erfindungsgemäßen Mitteln präparierten Garne oder Zwirne beschrieben.

## Beispiel 1

### 1. Zusammensetzung des wasserfreien Wirkstoffes

| | | |
|---|---|---|
| a) | Polydimethylsiloxan (40 000 $mm^2\ s^{-1}$) | 80,0 Gew.-% |
| $b_1$) | Hartparaffin, Schmelzpunkt 60—62° C | 10,0 Gew.-% |
| $b_2$) | Esterwachs, Schmelzpunkt 85° C | 3,0 Gew.-% |
| c) | Ölsäure | 1,7 Gew.-% |
| d) | Imidazoliniumsalz folgender Formel: | |

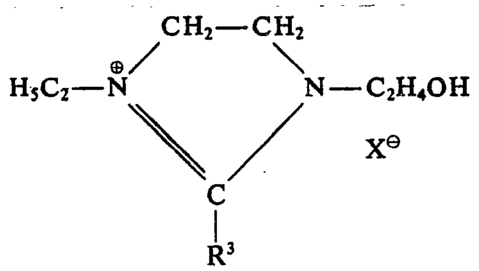

mit

$R^3$ = Heptadecenyl;
$X^{\ominus} = C_2H_5OSO_3^{\ominus}$ 3,0 Gew.-%

e) ethoxyliertes Kokosfettamin mit 5 Ethylenoxideinheiten 2,3 Gew.-%

### 2. Herstellung der erfindungsgemäßen Zubereitung

2.1 Herstellung der Siliconölemulsion:

Eine Mischung aus 15,0 g der Komponente (d), 8,5 g Ölsäure (c), 577,0 g Wasser und 400 g Siliconöl (a) wird im Spalthomogenisator bei 250 bar emulgiert.

2.2 Herstellung der Wachsdispersion:

487 g Wasser werden mit 6,0 g Eisessig versetzt auf 90°C erhitzt. Mit einem Schnellrührer wird innerhalb 20 Minuten eine Schmelze aus 330 g der Komponente ($b_1$), 100 g der Komponente ($b_2$), 77 g Ölsäure (c) und 115 g der Komponente (d) eingerührt. Die entstandene Dispersion wird bei 250 bar durch einen Spalthomogenisator gepumpt und abgekühlt.

2.3 Die fertige Stammemulsion entsteht durch Mischen von 660 g Siliconölemulsion mit 100 g Wachsdispersion.

### 3. Applikation der erfindungsgemäßen Zubereitung

Aus Reißkabel gefertigter PES-Dreifachzwirn der Nm 100/3 wird nach dem Färben und reduktiven Reinigen auf der Färbereikreuzspule belassen und in einem Laborfärbeapparat wie folgt präpariert:

Auf 800 g Zwirn und 10 l Wasser werden 80 h Stammemulsion zugesetzt. Unter Umpumpen wird innerhalb 25 Minuten auf 70°C aufgeheizt. Nach dieser Zeit ist der Wirkstoff völlig ausgezogen, und die klare Flotte wird abgelassen.

### 4. Anwendungstechnische Prüfungen des mit erfindungsgemäßer Formulierung behandelten Materials

Auflagebestimmungen aus verschiedenen Lagen der Spule ergaben Werte zwischen 4,8 und 5,2%.

Beim Abziehen des präparierten Fadens durch die Führungselemente eines Doppelsteppstich-Schnellnähers mit 15 m/min ergeben sich sehr gleichmäßige Spannungswerte von 140 ± 5 g; unpräparierter Faden zeigt vergleichsweise Spannungsschwankungen von 500 bis 800 g bzw. Fadenbruch.

Beim Vernähen von 14 Lagen eines Baumwollgewebes mit Leinenbindung und einem Flächengewicht von 300 g/m² bei einer Nähgeschwindigkeit von 5000 Stichen/min sind regelmäßig Nahtlängen über 40 cm ohne Fadenbruch erzielbar.

Im Vergleich dazu reißt unpräparierter Faden nach Nahtstrecken von 2 bis 5 cm.

Eine substantive Präparation des Standes der Technik nach Beispiel 1 der DE-A-2 816 196 ergibt unter gleichen Bedingungen Nahtstrecken von 7 bis 12 cm.

Ein Vergleichsversuch, bei dem jedoch die Präparation ohne Verwendung der erfindungsgemäß enthaltenen Komponente (c) (Ölsäure) eingesetzt wird, zeigt deutlich schlechtere anwendungstechnische Eigenschaften:

| | Wirkstoff gemäß Abschnitt 1. mit Ölsäure | ohne Ölsäure |
|---|---|---|
| % Auszug | 100 | ~ 10 |
| Reibwert (q) | 140 | 250 |
| Nähwert | > 40 | 10 |

## Beispiel 2

### 1. Zusammensetzung des wasserfreien Wirkstoffes

| | | |
|---|---|---|
| a) | Polydimethylsiloxan (12 500 mm² s⁻¹) | 15,0 Gew.-% |
| b) | Paraffin, Schmelzpunkt 62–64°C | 66,5 Gew.-% |
| $c_1$) | Ölsäure | 0,2 Gew.-% |
| $c_2$) | Stearinsäure | 7,2 Gew.-% |
| d) | Imidazoliniumsalz der in Beispiel 1 angegebenen Formel mit $R^3$ = Alkyl $C_7$ bis $C_{17}$ (Kokosfettderivat) $X^{\ominus} = CH_3COO^{\ominus}$ | 11,1 Gew.-% |

## 2. Herstellung der erfindungsgemäßen Zubereitung

2.1 Herstellung der Siliconölemulsion:

Es werden 400 g des Siliconöls (a) mittels 5,3 g Ölsäure ($c_1$) und 15 g Imidazoliniumsalz (d) in 577 g Wasser emulgiert.

2.2 Herstellung der Wachsemulsion:

Es wird in 580 g heißem Wasser eine Schmelze aus 333 g Wachs (b), 36 g Stearinsäure ($c_2$) und 53 g Imidazoliniumsalz (d) emulgiert.

2.3 Die fertige Stammemulsion wird aus 100 g Siliconölemulsion und 533 g Wachsemulsion gemischt.

## 3. Applikation der erfindungsgemäßen Zubereitung

Mit dieser Formulierung wird gefärbter Nähzwirn aus Baumwolle-Polyester-Coregarn, Nm 60/3, präpariert. Der pH-Wert der Flotte beträgt dabei 5,5, eingestellt mit Essigsäure.

## 4. Prüfung des mit erfindungsgemäßer Zubereitung behandelten Materials

Die analog Beispiel 1 gemessenen Spannungswerte betragen 120±5 g. Mit der erwähnten Formulierung aus Beispiel 1 der DE-A-2 816 196 erhält man Spannungswerte von 150±10 g.

Eine nicht substantive Tauchimprägnierung mit einer Siliconölemulsion gemäß Beispiel 1 der DE-A-2 753 200 ergibt Spannungswerte von 165±40 g.

# Beispiel 3

## 1. Zusammensetzung des wasserfreien Wirkstoffes

| | | |
|---|---|---|
| a) | Polydimethylsiloxandiol (5000 $mm^2\ s^{-1}$) | 20,0 Gew.-% |
| b) | Tafelparaffin, Schmelzbereich 42—45° C | 64,0 Gew.-% |
| c) | Ölsäure | 8,0 Gew.-% |
| d) | Imidazoliniumsalz der in Beispiel 1 angegebenen Formel mit $R^3$ = Undecyl; $X^{\ominus} = Br^{\ominus}$ | 4,0 Gew.-% |
| e) | ethoxyliertes Stearylamin (10 EO) | 4,0 Gew.-% |

## 2. Herstellung der erfindungsgemäßen Zubereitung

Die Komponenten der Rezeptur werden nach Aufschmelzen des Tafelparaffins innig gemischt.

Die Mischung wird in der doppelten Menge 70° C heißen Wassers mittels Kolloidmühle emulgiert.

## 3. Applikation der erfindungsgemäßen Zubereitung

Vier verschiedene Typen feinen Strickgarns aus unterschiedlichen Fasermaterialien wurden übereinstimmend wie folgt präpariert:

Es wurde 10 Minuten bei einem mit Essigsäure eingestellten pH-Wert von 5,5 und Raumtemperatur im Kreuzspulfärbeapparat vorgespült. Nach Ablassen und Neufüllen wurde dem Wasser die für die gewünschte Wirkstoffauflage von 1% erforderliche Präparationsmenge zugesetzt und mit Essigsäure auf einen pH-Wert von 4,5 eingestellt. Dann wurde bei ständigem Umpumpen innerhalb von 20 Minuten auf 55° C aufgeheizt. Nach diesem Prozeß war die Flotte klar.

4. Prüfung des behandelten Materials

Die getrockneten Garne wurden auf Reißkraft und Reibung untersucht. Der Reißkraftverlust betrug 0% bis maximal 5% im Vergleich zu 10% bis 22% bei Anwendung einer substantiven Paraffin-Präparation des bisherigen Standes der Technik.

Die mit einer Reibwaage der Firma Schlafhorst, Mönchengladbach, gemessenen Koeffizienten sind in einer Tabelle zusammengefaßt.

| Garntyp | Stärke (nm) | Reibungskoeffizient erfindungsgemäß | nicht erfindungsgemäß | unbehandelt |
|---|---|---|---|---|
| PES/BW | 60 | 0,18 | 0,21 | 0,28 |
| BW | 60 | 0,19 | 0,23 | 0,33 |
| Acryl | 50 | 0,20 | 0,23 | 0,29 |
| PES/Wolle | 60/2 | 0,19 | 0,22 | 0,30 |

PES = Polyester
BW = Baumwolle
Acryl = Polyacrylnitril
PES/Wolle = Polyester/Wolle

## Beispiel 4

Die in Beispiel 3 beschriebene anwendungsfertige Formulierung wurde nach dem in Beispiel 3 beschriebenen Applikationsprozeß mit 5% Auflage auf Baumwollnähzwirn der Nm 60/3 aufgetragen.

Die mittlere Reißkraft des erfindungsgemäß präparierten Garnes betrug ca. 750 g; nach dem Stand der Technik präpariertes Material erforderte nur eine Reißkraft von ca. 650 g bis zum Bruch. Für unbehandeltes Material lag der Wert bei ca. 800 g.

Die Laufeigenschaften an der Nähmaschine wurden wie in Beispiel 1 beschrieben gemessen; dabei ergaben sich folgende Spannungswerte:

| | |
|---|---|
| erfindungsgemäß | 220— 250 g |
| Vergleichswert (nicht erfindungsgemäß) | 280— 320 g |
| unpräpariert | 400—1000 g bzw. Fadenbruch |

## Beispiel 5

1. Zusammensetzung des wasserfreien Wirkstoffes

| | | |
|---|---|---|
| a) | Phenylmethylpolysiloxanöl (900 $mm^2\ s^{-1}$) mit 15 Mol-% Diphenylsiloxyeinheiten | 60,0 Gew.-% |
| $b_1$) | Hartparaffin, Schmelzbereich 60—62° C | 15,0 Gew.-% |
| $b_2$) | teilverseiftes oxidiertes Fischer-Tropsch-Wachs, Tropfpunkt 96—100° C | 15,0 Gew.-% |
| c) | Kokosfettsäure | 2,9 Gew.-% |
| d) | Imidazoliniumsalz der in Beispiel 1 angegebenen Formel mit $R^3$ = Heptadecyl; $X^{\ominus} = CH_3COO^{\ominus}$ | 7,1 Gew.-% |

## 2. Herstellung der erfindungsgemäßen Zubereitung

2.1 Herstellung der Siliconölemulsion:

Die Komponenten (a), (c) und ein Drittel der Komponente (d) werden bei 45°C zu einer Emulsion mit 50% Silicongehalt verarbeitet.

2.2 Herstellung der Wachsdispersion:

Die Wachse ($b_1$ und $b_2$) werden mit dem Rest des Emulgators (d) in der dreifachen Menge 100°C heißen Wassers unter Druck emulgiert.

2.3 Die Gesamtmenge der beiden Emulsionen wird gemischt.

## 3. Anwendung der erfindungsgemäßen Zubereitung und Prüfung des erzielten Effektes

Nähzwirn der Nm 80/3 aus Polyester-Schnittstapel wird, wie in Beispiel 1 beschrieben, präpariert.

Mit dem so behandelten Zwirn lassen sich nach dem in Beispiel 1 beschriebenen Nähtest sogar auf 16 Lagen Baumwollstoff Nahtlängen von mehr als 40 cm erzielen.

**Patentansprüche**

1. Mittel mit einem Gehalt an Siliconöl und Wachs zum substantiven Präparieren von Garnen oder Zwirnen in Form einer Öl/Wasser-Dispersion, dadurch gekennzeichnet, daß es

a) 5 bis 80 Gew.-% Siliconöl einer Viskosität von 500 bis 50 000 $mm^2\ s^{-1}$ bei 25°C,
b) 10 bis 80 Gew.-% Wachs mit einem Schmelzpunkt $\geqq$40°C,
c) 1 bis 10 Gew.-% Fettsäuren mit 6 bis 22 Kohlenstoffatomen, die gesättigt, verzweigt oder substituiert sein können oder Doppelbindungen aufweisen,
d) 0,4 bis 12 Gew.-% kationaktive Imidazoliniumsalze,
e) 0 bis 10 Gew.-% ethoxylierte Fettamine,

wobei die Summe der Bestandteile a) bis e) 100 Gew.-% ergeben muß, in Wasser dispergiert oder gelöst enthält.

2. Mittel nach Anspruch 1, dadurch gekennzeichnet, daß die Komponente a) eine Viskosität von 1000 bis 10 000 $mm^2\ s^{-1}$ bei 25°C hat.

3. Mittel nach Anspruch 1 oder 2, dadurch gekennzeichnet, daß die Komponente b) einen Schmelzpunkt >60°C hat.

4. Verfahren zur Herstellung des Mittels nach einem oder mehreren der Ansprüche 1 bis 3, dadurch gekennzeichnet, daß man das Siliconöl (Bestandteil a)) mit einem Teil der Fettsäuren (Bestandteil c)) und einem Teil der Imidazoliniumsalze (Bestandteil d)) einerseits und das Wachs (Bestandteil b)) mit den restilchen Anteilen der Fettsäuren (Bestandteil c)) und des Imidazoliniumsalzes (Bestandteil d)) andererseits emulgiert und die erhaltenen Dispersionen miteinander vermischt.

**Claims**

1. Composition containing silicone oil and wax for the substantive dressing of yarns or twisted yarns, in the form of oil/water dispersion, characterised in that it contains, dispersed or dissolved in water,

a) 5 to 80% by weight of silicone oil having a viscosity of 500 to 50 000 $mm^2\ s^{-1}$ at 25°C,
b) 10 to 80% by weight of wax having a melting point of $\geqq$40°C,
c) 1 to 10% by weight of fatty acids containing 6 to 22 carbon atoms, which acids may be saturated, branched or substituted or may posses double bonds,
d) 0.4 to 12% by weight of cationic imidazolinium salts and
e) 0 to 10% by weight of ethoxylated fatty amines,

the sum of constituents a) to e) having to amount to 100% by weight.

2. Composition according to Claim 1, characterised in that component a) has a viscosity of 1000 to 10 000 $mm^2\ s^{-1}$ at 25°C.

3. Composition according to Claim 1 or 2, characterised in that component b) has a melting point of >60° C.

4. Process for the preparation of the composition according to one or more of Claims 1 to 3, characterised in that on the one hand the silicone oil (constituent al)) is emulsified with a part of the fatty acids (constituent c)) and a part of the imidazolinium salts (constituent d)) and, on the other hand, the wax (constituent b)) is emulsified with the remaining proportion of the fatty acids (constituent c)) and the imidazolinium salt (constituent d)) and the resulting dispersion are mixed with one another.

## Revendications

1. Produit contenant de l'huile de silicone et une cire pour la préparation substantive de fils simples ou retors, sous la forme d'une dispersion huile dans l'eau, caractérisé en ce qu'il contient, en dispersion ou en solution dans l'eau:

a) 5 à 80% en poids d'une huile de silicone ayant une viscosité de 500 à 50 000 $mm^2\ s^{-1}$ à 25° C,
b) 10 à 80% en poids d'une cire ayant un point de fusion supérieur ou égal à 40° C,
c) 1 à 10% en poids d'acides gras à 6 à 22 atomes de carbone, qui peuvent être saturés, ramifiés ou substitués ou présentent des doubles liaisons,
d) 0,4 à 12% en poids de sels cationiques d'imidazolinium,
e) 0 à 10% en poids d'amines grasses éthoxylées,

le total des constituants a) à e) devant donner 100% en poids.

2. Produit selon la revendication 1, caractérisé en ce que le constituant a) a une viscosité de 1000 à 10 000 $mm^2\ s^{-1}$ à 25° C.

3. Produit selon l'une des revendications 1 ou 2, caractérisé en ce que le constituant b) a un point de fusion >60° C.

4. Procédé pour la préparation du produit selon une ou plusieurs des revendications 1 à 3, caractérisé en ce qu'on mélange d'une part l'huile de silicone (constituant a)) avec une partie des acides gras (constituant c)) et une partie des sels d'imidazolinium (constituant d)), et d'autre part la cire (constituant b)) avec la partie résiduelle des acides gras (constituant c)) et du sel d'imidazolinium (constituant d)), et qu'on mélange l'une à l'autre les dispersions obtenues.